# EUROPÄISCHE PATENTSCHRIFT

(11) **EP 3 589 696 B1**
(45) Veröffentlichungstag und Bekanntmachung des Hinweises auf die Patenterteilung: **24.02.2021**
(21) Anmeldenummer: 18706282.3
(22) Anmeldetag: 27.02.2018
(51) Int. Cl.: C08L 77/02

(54) **FLAMMGESCHUETZTE POLYAMIDE MIT PVP**
FLAME-RETARDANT POLYAMIDES WITH PVP
POLYAMIDE IGNIFUGÉ À BASE DE PVP

(30) Priorität: 01.03.2017 EP 17158705
(43) Veröffentlichungstag der Anmeldung: 08.01.2020
(73) Patentinhaber: BASF SE, 67056 Ludwigshafen am Rhein (DE)
(72) Erfinder: ROTH, Michael, 67056 Ludwigshafen (DE); HEUSSLER, Michaela, 67056 Ludwigshafen (DE); USKE, Klaus, 67056 Ludwigshafen (DE); MINGES, Christoph, 67056 Ludwigshafen (DE)
(74) Vertreter: BASF IP Association
(86) Internationale Anmeldenummer: PCT/EP2018/054762
(87) Internationale Veröffentlichungsnummer: WO 2018/158224

(56) Entgegenhaltungen:
- EP-A1- 1 522 551
- EP-A2- 2 328 965
- DE-A1-102010 018 680
- DE-A1-102013 004 046
- US-A1- 2016 304 715
- A GNATOWSKI ET AL: "Functional materials based on PA6/PVP blends", JOURNAL OF ACHIEVEMENTS IN MATERIALS AND MANUFACTURING ENGINEERING, Bd. 18, Nr. 1-2, 1. Januar 2006 (2006-01-01), Seiten 91-94, XP055369935,

## Beschreibung

Die Erfindung betrifft thermoplastische Formmassen, enthaltend
A) 20 bis 96,9 Gew.-% eines thermoplastischen Polyamides,
B) 1 bis 20 Gew.-% eines anorganischen Phosphinatsalzes,
C) 1 bis 15 Gew.-% eines organischen Phosphinatsalzes,
D) 1 bis 15 Gew.-% Melamincyanurat,
E) 0,1 bis 10 Gew.-% eines Polyvinylpyrrolidonhomopolymeren,
F) 0 bis 50 Gew.-% weiterer Zusatzstoffe,
wobei die Summe der Gewichtsprozente A) bis F) 100 % ergibt und das Molekulargewicht Mn (Zahlenmittel) der Komponente E) gemäß GPC (PVP-Standard und Wasser/Methanol (80/20) mit 0,01 mol/L Phosphatpuffer (pH 7,4) als Elutionsmittel) von 1000 bis 500.000 g/mol beträgt.

Außerdem betrifft die vorliegende Erfindung flammgeschützte Formmassen aus diesen Polyamidmischungen und die Verwendung derartiger Formmassen zur Herstellung von Fasern, Folien und Formkörpern und die hierbei erhältlichen Formkörper, Fasern und Folien jeglicher Art.

Brandwidrig ausgerüstete Polyamide gewinnen zunehmend an Bedeutung. Dabei besteht ein besonderes Interesse an Produkten mit hellen Farbeinstellungen für den Elektrosektor. Von den bekannten Brandschutzsystemen sind jedoch roter Phosphor und Halogenverbindungen in Kombination mit Synergisten für diesen Anwendungsbereich nicht geeignet. Halogenverbindungen setzen die elektrischen Eigenschaften wie Kriechstromfestigkeit und Durchschlagfestigkeit herab. Roter Phosphor kommt wegen seiner Eigenfarbe für helle Farbeinstellungen nicht in Betracht. Zur Herstellung farbheller, unverstärkter und flammwidrig eingestellter Polyamide wird beispielsweise in der DE-A 1694 254 der Zusatz von Melamin empfohlen. Bei glasfaserverstärkten Polyamiden sind Melamin und Melaminsalze - wenn diese ohne zusätzlichen Flammschutz-Synergisten verwendet werden - weniger wirksam, die Glühdrahtfestigkeit dieser Produkte ist speziell in dünnen Wandstärken sehr niedrig.

Unverstärkte Formmassen, die generell eine höhere Glühdrahtbeständigkeit aufweisen, haben hingegen den Nachteil, daß die mechanischen Eigenschaften wie Steifigkeit und Festigkeit nicht ausreichend sind. Der Zusatz von Glasfasern zu Polyamid-Mischungen mit Melamincyanurat verbessert zwar die mechanischen Eigenschaften, jedoch werden die Flammschutzeigenschaften nachteilig beeinflußt, da Glasfasern durch den sogenannten Dochteffekt den Flammschutz drastisch verschlechtern. Es ist deshalb aus der EP-A 241 702 bekannt, daß PA-Mischungen aus Glasfasern mit Melamincyanurat in ihrem Flammschutzverhalten verbessert werden können, indem Kurzglasfasern in der Mischung verwendet werden.

Die Wirksamkeit von Flammschutzadditivmischungen wird im Wesentlichen durch Brandprüfungen nach UL94-V beschrieben. Für bestimmte Anwendungen von flammgeschützten Polymeren in der Gebäudeinstallation sowie in Niederspannungs-Schaltgeräten ist jedoch vornehmlich der Glühdrahttest nach IEC 60695-2-12 ein wesentliches Kriterium, wobei zusätzlich eine hohe Flammwidrigkeit wünschenswert ist. Für bestimmte Anwendungen von flammgeschützten Polymeren im Haushaltsgerätebereich ist jedoch vornehmlich der Glühdrahttest nach IEC 60695-2-13 von Bedeutung.

Beim bekannten Stand der Technik können Glasfasern, soweit verwendet, als konventionelle Endlosfasern (Rovings) oder Schnittfasern (4-6 mm lange Faserbündel) eingesetzt werden. Durch Scherung im Extruder ergibt sich dann eine Glasfaserlängenverteilung im Produkt, die bei üblicher Verarbeitung bei ca. 250-300 µm liegt (bezogen auf ein Produkt mit 25 % Glasfasergehalt). Dabei ist zu berücksichtigen, daß die mittlere Faserlänge im Allgemeinen mit zunehmendem Faseranteil sinkt, da es zu erhöhten Faser-Wechselwirkungen in der Einarbeitungszone und damit zu vermehrtem Faserbruch kommt (F. Raumsteiner, R. Theysohn, Comp. Sci. Techn. 23 (1985) 231).

Die Verwendung von PVP in Polymer-Zusammensetzungen bzw. Formmassen, u.a. PA/PVP-Zusammensetzungen in Formmassen, ist aus der EP 2 328 965 B1, DE 10 2013 004 046 A1, DE 10 2010 018 680 A1, EP 1 522 551 A1 bekannt. Weiterhin sind funktionelle Materialien aus PA6/PVP-Blends, jedoch ohne die Flammwidrigkeit zu erwähnen, aus A. Gnatowski et al., Functional materials based on PA6/PVP blends, Journal of Achievements in Materials dn Manufacturing Engineering 2006, Bd. 18 (1-2), Seiten 91-94 (September-Oktober 2006) bekannt.

Als besonders geeignet erwies sich eine Kombination aus einem anorganischen PhosphinatSalz in Kombination mit einem organischen Phosphinatsalz und einer Melaminverbindung im Stand der Technik (WO2015/087099), welche hier in Kombination mit organischen Verbindungen mit mehreren Hydroxylgruppen als 4. Flammschutzmittel eingesetzt werden. Die Wärmealterungsbeständigkeit und eine Vergilbungsneigung derartiger thermoplastischen Formmassen unter Wärmeeinfluß ist jedoch verbesserungswürdig.

Aufgabe der vorliegenden Erfindung war es daher, flammgeschützte thermoplastische Formmassen zur Verfügung zu stellen, welche gute mechanische Eigenschaften, eine hohe Flammwidrigkeit und selbstverlöschende Eigenschaften gemäß UL94-V aufweisen und möglichst geringe Nachbrennzeiten bei der Glühdrahtprüfung gemäß IEC 60695-2-13 aufzeigen, so daß diese insbesondere für den Haushaltsgerätebereich einsetzbar sind.

Weiterhin sollen die Wärmealterungsbeständigkeit und eine Vergilbungsneigung der thermoplastischen Formmassen unter Wärmeeinfluß verbessert werden.

Demgemäß wurden die eingangs definierten Formmassen gefunden. Bevorzugte Ausführungsformen können den Unteransprüchen entnommen werden.

Als Komponente A) enthalten die erfindungsgemäßen Formmassen 20 bis 96,9, vorzugsweise 30 bis 92,5 und insbesondere 30 bis 80 Gew.-% mindestens eines Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht Mw (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, mit einem 1:1 molaren Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid® C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6).

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

AB-Polymere:
- PA 6: ε-Caprolactam
- PA 7: Önantholactam
- PA 8: Capryllactam
- PA 9: 9-Aminopelargonsäure
- PA 11: 11-Aminoundecansäure
- PA 12: Laurinlactam
- AA/BB-Polymere:
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-Nonandiamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Dodecandisäure
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure
- PA410: 1,4-Tetramethylendiamin, Sebacinsäure
- PA510: 1,5-Pentamethylendiamin, Sebacinsäure
- PA10T: 1,10-Decandiamin, Terephthalsäure

Als Komponente B) enthalten die erfindungsgemäßen Formmassen 1 bis 20, insbesondere 5 bis 20, vorzugsweise 5 bis 15 Gew.-% eines anorganischen Phosphinatsalzes.

Bevorzugte Komponenten B) sind Metallsalze einer anorganischen Phosphinsäure, die der Formel (I) entsprechen: 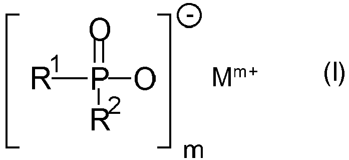 in der R¹ und R² Wasserstoff und
M = Mg, Ca, Al, Zn und
m = 1 bis 3
bedeuten.

Insbesondere bevorzugte Formmassen enthalten als Komponente B) Aluminiumhypophosphit oder deren Mischungen.

Als Komponente C) enthalten die erfindungsgemäßen Formmassen 1 bis 15, bevorzugt 1 bis 10 und insbesondere 2 bis 8 Gew.-%, bezogen auf die Summe der Komponenten A) bis F), eines organischen Phosphinatsalzes.

Als bevorzugte Komponente C) eignen sich Phosphinsäuresalze der Formel (II) 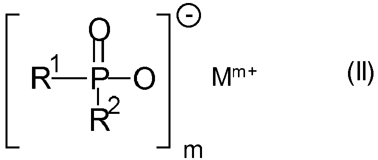
in der R¹ und R² gleich oder verschieden sind und C₁-C₆-Alkyl, linear oder verzweigt und/oder Aryl;
M = Mg, Ca, Al, Ti, Zn, Fe, Li, Na, K oder eine protonierte Stickstoffbase
m 1 bis 5;
bedeuten.

Bevorzugt sind R¹, R² der Komponente B) gleich oder verschieden und bedeuten Methyl, Ethyl, n-Propyl, Iso-Propyl, n-Butyl, tert.-Butyl, n-Pentyl und/oder Phenyl.

Bevorzugt Komponenten C) sind Aluminiumsalze einer Dialkylphosphinsäure der Formel (II).

Besonders bevorzugt ist R¹, R² Methyl, Ethyl und M = Al, wobei Al-diethylphosphinat besonders bevorzugt ist.

Die Herstellung der Phosphinate erfolgt vorzugsweise durch Ausfällen der entsprechenden Metallsalze aus wässrigen Lösungen. Die Phosphinate können jedoch auch in Gegenwart eines geeigneten anorganischen Metalloxids oder -sulfids als Trägermaterials (Weißpigmente, wie z.B. TiO₂, SnO₂, ZnO, ZnS, SiO₂) gefällt werden. Man erhält somit oberflächenmodifizierte Pigmente, die als lasermarkierbare Flammschutzmittel verwendet werden können.

Als Komponente D) enthalten die erfindungsgemäßen Formmassen 1 bis 15, vorzugsweise 1 bis 10, und insbesondere 2 bis 8 Gew.-% Melamincyanurat.

Das gemäß der Erfindung (Komponente D)) geeignete Melamincyanurat ist ein Reaktionsprodukt aus vorzugsweise äquimolaren Mengen von Melamin (Formel I) und Cyanursäure bzw. Isocyanursäure (Formeln la und Ib).

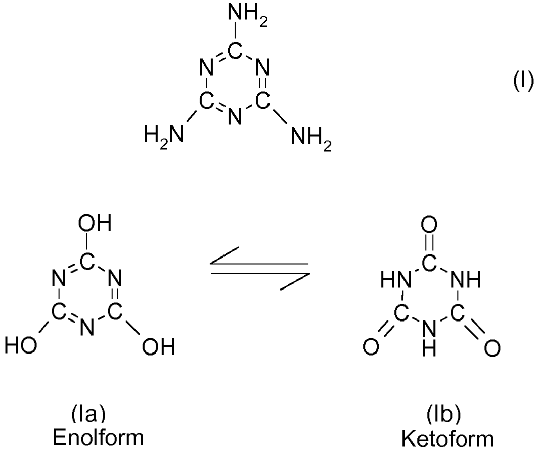

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm und einem d₉₉ Wert kleiner 50 µm.

Ganz besonders bevorzugt wird erfindungsgemäß Melamincyanurat eingesetzt, dessen Teilchengrößenverteilung bevorzugt beträgt:
d₉₈ < 25 µm, bevorzugt < 20 µm
d₅₀ < 4,5 µm, bevorzugt < 3 µm.

Unter einem dso-Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Als Komponente E) enthalten die erfindungsgemäßen Formmassen 0,1 bis 10, bevorzugt 0,5 bis 8 und insbesondere 0,5 bis 5 Gew.-% eines Polyvinylpyrrolidonhomopolymeren.

Derartige PVP-Polymere sind als wässrige Lösungen oder in Pulverform erhältlich, wobei pulverförmig bevorzugt ist.

Im Allgemeinen sind PVP-Homopolymere erhältlich durch radikalische Polymerisation von 1-Vinylpyrrolidin-2-on nach Verfahren der Masse-, Lösungs- oder Suspensionspolymerisation in Gegenwart von Radikalbildnern und meist in Gegenwart von aliphatischen Aminen, die die Zersetzung des Monomeren bei der Reaktion unterbinden.

Geeignete Produkte sind im Handel unter der Marke Luvitec® der BASF SE erhältlich.

Bevorzugte Komponenten E) sind solche, in denen das Molekulargewicht Mn (Zahlenmittel) der Komponente E) gemäß GPC (PVP-Standard und Wasser/Methanol (80/20) mit 0.01 mol/L Phosphatpuffer (pH 7.4) als Elutionsmittel) von 1500 bis 200.000 g/mol beträgt.

Bevorzugte Komponenten E) weisen folgende Partikelgrößen auf:
d₁₀ von 15 bis 90, insbesondere von 15 bis 60 µm,
d₅₀ von 50 bis 180, insbesondere von 50 bis 160 µm,
d₉₀ von 100 bis 350, insbesondere von 100 bis 320 µm.

Die Teilchengrößen können im Allgemeinen mittels Laserbeugung am Pulver (Sympatec-Helos Rodos) bestimmt werden.

Als Komponente F) können die erfindungsgemäßen Formmassen 0 bis 50, vorzugsweise bis zu 40 und insbesondere bis zu 30 Gew.-% weitere Zusatzstoffe enthalten.

Als faser- oder teilchenförmige Füllstoffe F) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quartz, Glimmer, Bariumsulfat und Feldspat genannt, die in Mengen 0 bis 50, bevorzugt von 5 bis 50 Gew.-%, insbesondere 10 bis 40 Gew.-% eingesetzt werden können.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
X NH₂-, 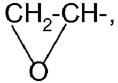 HO-,
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1.

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf F)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als weitere Füllstoffe seien Kaolin, calciniertes Kaolin, Wollastonit, Talkum und Kreide, prezipitierter Kalzit, genannt sowie zusätzlich plättchen- oder nadelförmige Nanofüllstoffe bevorzugt in Mengen zwischen 0,1 und 10 %. Bevorzugt werden hierfür Mica, Böhmit, Bentonit, Montmorillonit, Vermicullit, Zinkoxid in Nadelform und Hektorit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe zu den erfindungsgemäßen Nanokompositen führt zu einer weiteren Steigerung der mechanischen Festigkeit.

Als Komponente F) können die Formmassen in Mengen von 1 bis 10, bevorzugt 0,5 bis 10, insbesondere 1 bis 8 Gew.-% kautschukelastische Polymerisate enthalten (oft auch als Schlagzähmodifier, Elastomere oder Kautschuke bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961), Seiten 392 bis 406 und in der Monographie von C.B. Bucknall "Toughened Plastics" (Applied Science Publishers, London, 1977) beschrieben.

Im Folgenden werden einige bevorzugte Arten solcher Elastomerer vorgestellt:
Bevorzugte Komponente F) sind Schlagzähmodifier auf Basis von Ethylencopolymeren, welche aufgebaut sind aus:
F₁) 40 bis 98 Gew.-%, bevorzugt 50 bis 94,5 Gew.-% Ethylen
F₂) 2 bis 40 Gew.-%, bevorzugt 5 bis 40 Gew.-% eines (Meth)Acrylates mit 1 bis 18 C-Atomen, oder/und
F₃) 0 bis 20 Gew.-%, bevorzugt 0,05 bis 10 Gew.-% funktioneller Monomerer, ausgewählt aus der Gruppe der ethylenisch ungesättigten Mono- oder Dicarbonsäuren oder der Carbonsäureanhydride oder Epoxidgruppen oder deren Mischungen, wobei die Summe der Gewichtsprozente F₁) bis F₃) 100 % ergibt,
   oder
ein Ethylen-(Meth)acrylsäure Copolymer, welches bis zu 72 % mit Zink neutralisiert ist.

Besonders bevorzugt sind Ethylencopolymere, aufgebaut aus:
F₁) 50 bis 69,9 Gew.-% Ethylen
F₂) 30 bis 40 Gew.-% eines (Meth)Acrylates mit 1 bis 18 C-Atomen
F₃) 0,1 bis 10 Gew.-% funktioneller Monomerer gemäß Anspruch 1,
wobei die Summe der Gewichtsprozente F₁) bis F₃) 100 % ergibt.

Der Anteil der funktionellen Gruppen F₃) beträgt 0,05 bis 5, vorzugsweise 0,2 bis 4 und insbesondere 0,3 bis 3,5 Gew.-%, bezogen auf 100 Gew.-% F).

Besonders bevorzugte Komponenten F₃) sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure D₂, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl, Octyl- und Decylacrylate bzw. die entsprechenden Ester der Methacrylsäure. Von diesen werden n-Butylacrylat und 2-Ethylhexylacrylat besonders bevorzugt.

Zusätzlich zu den Estern können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere F₃) seien Acrylsäure, Methacrylsäure, tertiäre Alkylester dieser Säuren, insbesondere Butylacrylat und Dicarbonsäuren wie Maleinsäure und Fumarsäure oder Anhydride dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im Allgemeinen im Bereich von 1 bis 80 g/10 min (gemessen bei 190°C und 2,16 kg Belastung).

Das Molekulargewicht dieser Ethylen-Copolymeren liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

Bevorzugt eingesetzte Handelsprodukte sind Fusabond® A 560, Lucalen® A 2910, Lucalen® A 3110, Nucrel 3990, Nucrel 925, Lotader AX 9800, Igetabond FS 7 M.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. von Blackley in der Monographie "Emulsion Polymerization" beschrieben wird. Die verwendbaren Emulgatoren und Katalysatoren sind an sich bekannt.

Insbesondere bevorzugt sind Copolymerisate, welche keine Einheiten F₂) enthalten, jedoch die Säurekomponente F₃) mit Zn neutralisiert wurde. Hierbei sind Ethylen-(Meth)acrylsäure-Copolymere bevorzugt, welche bis zu 72 % mit Zink neutralisiert wurden (im Handel als Surlyn® 9520 der Firma DuPont erhältlich).

Selbstverständlich können auch Mischungen der vorstehend aufgeführten Kautschuktypen eingesetzt werden.

Als Komponente F) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.
Die Metallionen sind vorzugsweise Erdalkali und Al, wobei Ca oder Mg besonders bevorzugt sind.
Bevorzugte Metallsalze sind Ca-Stearat und Ca-Montanat sowie Al-Stearat.
Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Als Komponente F) können die erfindungsgemäßen Formmassen 0,05 bis 3, vorzugsweise 0,1 bis 1,5 und insbesondere 0,1 bis 1 Gew.-% eines Cu-Stabilisators, vorzugsweise eines Cu-(I)-Halogenids, insbesondere in Mischung mit einem Alkalihalogenid, vorzugsweise KJ, insbesondere im Verhältnis 1 : 4, enthalten.

Als Salze des einwertigen Kupfers kommen vorzugsweise Cu-(I)-Komplexe mit PPh₃, Kupfer(I)-Acetat, Kupfer(I)-Chlorid, -Bromid und -Jodid in Frage. Diese sind in Mengen von 5 bis 500 ppm Kupfer, vorzugsweise 10 bis 250 ppm, bezogen auf Polyamid, enthalten.

Die vorteilhaften Eigenschaften werden insbesondere erhalten, wenn das Kupfer in molekularer Verteilung im Polyamid vorliegt. Dies wird erreicht, wenn man der Formmasse ein Konzentrat zusetzt, das Polyamid, ein Salz des einwertigen Kupfers und ein Alkalihalogenid in Form einer festen, homogenen Lösung enthält. Ein typisches Konzentrat besteht z.B. aus 79 bis 95 Gew.-% Polyamid und 21 bis 5 Gew.-% eines Gemisches aus Kupferjodid oder -bromid und Kaliumjodid. Die Konzentration der festen homogenen Lösung an Kupfer liegt bevorzugt zwischen 0,3 und 3, insbesondere zwischen 0,5 und 2 Gew.-%, bezogen auf das Gesamtgewicht der Lösung und das molare Verhältnis von Kupfer(I)-Jodid zu Kaliumjodid liegt zwischen 1 und 11,5, vorzugsweise zwischen 1 und 5.
Geeignete Polyamide für das Konzentrat sind Homopolyamide und Copolyamide, insbesondere Polyamid 6 und Polyamid 6.6.

Als sterisch gehinderte Phenole F) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 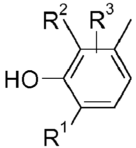 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxygruppe oder eine substituierte Aminogruppe.

Antioxidantien der genannten Art werden beispielsweise in der DE-A 27 02 661 (US- 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 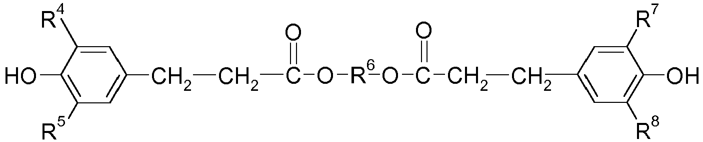 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formel entsprechen, sind 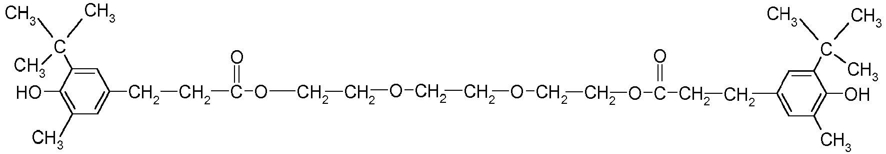 (Irganox® 245 der Firma BASF SE) 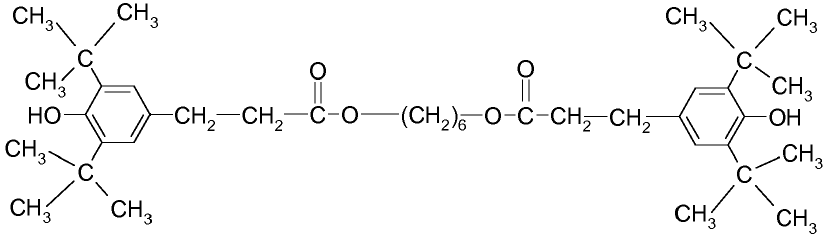 (Irganox® 259 der Firma BASF SE)

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythrityl-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phospha-bicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydro-cinnamid (Irganox® 1098) und das vorstehend beschriebene Irganox® 245 der Firma BASF SE, das besonders gut geeignet ist.

Die Antioxidantien F), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis F) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente F) können die erfindungsgemäßen Formmassen 0,05 bis 5, vorzugsweise 0,1 bis 2 und insbesondere 0,25 bis 1,5 Gew.-% eines Nigrosins enthalten.
Unter Nigrosinen versteht man im allgemeinen eine Gruppe von schwarzen oder grauen, mit den Indulinen verwandten Phenazin-Farbstoffen (Azin-Farbstoffen) in verschiedenen Ausführungsformen (wasserlöslich, fettlöslich, spritlöslich), die bei Wollfärberei und -druck, beim Schwarzfärben von Seiden, zum Färben von Leder, Schuhcremes, Firnissen, Kunststoffen, Einbrennlacken, Tinten und dergleichen, sowie als Mikroskopiefarbstoffe Verwendung finden.

Man gewinnt die Nigrosine technisch durch Erhitzen von Nitrobenzol, Anilin und salzsaurem Anilin mit Metall. Eisen und FeCl₃ (Name von lateinischem niger = schwarz).

Die Komponente F) kann als freie Base oder auch als Salz (z.B. Hydrochlorid) eingesetzt werden.

Weitere Einzelheiten zu Nigrosinen sind beispielsweise dem elektronischen Lexikon Römpp Online, Version 2.8, Thieme-Verlag Stuttgart, 2006, Stichwort "Nigrosin" zu entnehmen.

Als Komponente F) können die erfindungsgemäßen thermoplastischen Formmassen übliche Verarbeitungshilfsmittel wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, usw. enthalten.

Als Beispiele für Oxidationsverzögerer und Wärmestabilisatoren sind sterisch gehinderte Phenole und/oder Phosphite und Amine (z.B. TAD), Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) bis F) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch gute mechanische Eigenschaften, eine hohe Flammwidrigkeit und selbstverlöschende Eigenschaften gemäß UL94-V aus und zeigen möglichst geringe Nachbrennzeiten bei der Glühdrahtprüfung gemäß IEC 60695-2-13, so daß diese insbesondere für den Haushaltsgerätebereich einsetzbar sind.

Weiterhin sind die Wärmealterungsbeständigkeit und die Vergilbungsneigung der thermoplastischen Formmassen unter Wärmeeinfluß verbessert worden.

Diese eignen sich daher zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informations-technologie-, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen die einen erhöhten Brandschutz erfordern angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten verwendet:
Komponente A:
   Polyamid 6 mit einer Viskositätszahl VZ von 107 ml/g, gemessen als 0.5 gew.-%ige Lösung in 96 gew.-%iger Schwefelsäure bei 25°C nach ISO 307 (Es wurde Ultramid® B22 der BASF SE verwendet).
Komponente B:
   Aluminiumhypophosphit (es wurde Phoslite® IP-A der Fa. Italmatch Chemicals SPA verwendet).
Komponente C:
   Aluminium-Salz der Diethylphosphinsäure (es wurde Exolit® OP1230 der Clariant GmbH verwendet).
Komponente D:
   Melamincyanurat einer mittleren Teilchengröße von ∼2.6 µm (es wurde Melapur® MC 25 der BASF SE verwendet).
Komponente E/1V: zum Vergleich
   Ethlen-vinylalkohol Copolymer mit 29% Ethylenanteil (es wurde Soarnol® DT2904RB der Fa. Nippon Gohsei verwendet).
Komponente E/2:
   pulverförmiges Polyvinylpyrrolidon Homopolymer mit einem zahlenmittleren Molekulargewicht Mn von 1500-2500 Dalton (es wurde Luvitec® K17 der BASF SE verwendet).
Komponente E/3:
   pulverförmiges Polyvinylpyrrolidon Homopolymer mit einem zahlenmittleren Molekulargewicht Mn von 11000-18000 Dalton (es wurde Luvitec® K30 der BASF SE verwendet).
Komponente E/4:
   Polyvinylpyrrolidon Homopolymer mit einem zahlenmittleren Molekulargewicht Mn von 300000-400000 Dalton (es wurde Luvitec® K90 der BASF SE verwendet).
Komponente F/1:
   Standard Schnittglasfaser für Polyamide, L = 4.0 mm, D = 10 µm
Komponente F/2 (Prämix PVP):
   als weitere Zusatzstoffe wurden in den Formulierungen E1 - E5 0.35% 3,3'-Bis(3,5-di-tert-butyl-4-hydroxyphenyl)-N,N'-hexamethylenedipropionamide (CAS-No. 23128-74-7) als Thermostabilisator und 0.4% Ethylen-bis-stearamid (CAS-No. 110-30-5) als Verarbeitungshilfsmittel eingesetzt.
Komponente F/2 (Prämix EvOH):
   als weitere Zusatzstoffe wurden in der Formulierung V1 0.35% 3,3'-Bis(3,5-di-tert-butyl-4-hydroxyphenyl)-N,N'-hexamethylenedipropionamide (CAS-No. 23128-74-7) und 0.2% Ethylene-bis-(oxyethylene)-bis-(3-(5-tert-butyl-4-hydroxy-m-tolyl)-propionate) (CAS-No. 36443-68-2) als Thermotabilisatoren und 0.4% Ethylen-bis-stearamid (CAS-No. 110-30-5) als Verarbeitungshilfsmittel eingesetzt.

Die Summe der Anteile der Komponenten A) bis F) in Tabelle 1 ergänzen sich zu 100 Gew.-%. Die Zusammensetzungen der Formmassen und die Ergebnisse der Messungen sind ebenfalls Tabelle 1 zu entnehmen.

### Herstellung der Formmassen

Es wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 250 - 270°C bei flachem Temperaturprofil gemischt, als Strang ausgetragen, bis zur Granulierfähigkeit abgekühlt und granuliert.

Die Prüfkörper für die in Tabelle 1 aufgeführten Untersuchungen wurden auf einer Spritzgießmaschine des Typs Arburg 420C bei einer Massetemperatur von ca. 250 - 290°C und einer Werkzeugtemperatur von ca. 80°C verspritzt.

Die Flammwidrigkeit der Formmassen wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde gemäß der Glühdrahtentzündlichkeitsprüfung GWFI (Glow-Wire-Flammability-Index) nach DIN EN 60695-2-12 bestimmt und der Glühdrahtentzündlichkeitsprüfung GWIT (Glow-Wire-Ignition-Temperature) nach DIN EN 60695-2-13 bestimmt.

Bei der GWFI-Prüfung wurde an 3 Prüfkörpern (beispielsweise an Platten der Geometrie 60 x 60 x 1,0 mm oder Rundscheibe) mit Hilfe eines glühenden Drahtes bei Temperaturen zwischen 650 und 960°C die maximale Temperatur ermittelt, die in 3 aufeinander folgenden Tests auch während der Einwirkzeit des Glühdrahtes nicht zur Entzündung führte. Der Probekörper wurde 30 Sekunden lang mit einer Kraft von 1 Newton gegen einen aufgeheizten Glühdraht gepresst. Die Eindringtiefe des Glühdrahts war auf 7 mm begrenzt. Der Test gilt als bestanden, wenn der Probekörper nach Entfernen des Glühdrahtes weniger als 30 Sekunden nachbrennt und wenn sich ein unter dem Probekörper liegendes Seidenpapier nicht entzündet.

Bei der GWIT-Prüfung wurde an 3 Prüfkörpern (beispielsweise an Platten der Geometrie 60 x 60 x 1,5 mm) mit Hilfe eines glühenden Drahtes bei Temperaturen zwischen 650 und 960°C die maximale Temperatur ermittelt, die in 3 aufeinander folgenden Tests auch während der Einwirkzeit des Glühdrahtes nicht zur Entzündung führte. Die angegebene Glühdrahtentzündungstemperatur lag 25K über der maximal ermittelten Temperatur. Als Kriterium der Entzündung galt dabei eine Flamme mit Brennzeiten >5 sec.

Die Wärmelagerung der Formmassen (beispielsweise an Platten der Geometrie 60 x 60 x 1,5 mm) erfolgte in Umluftöfen bei der jeweils angegebenen Temperatur.
Die Farbmessung erfolgte gemäß DIN 53236, Belichtung R45/0°, nach CIE L*a*b.

Anhand der Daten von Tabelle 1 geht hervor, daß die erfindungsgemäßen Zusammensetzungen E1-E5 sowohl hinsichtlich ihrer Flammwidrigkeit bei dünnen Wandstärken (UL94 V-2 bei 0.4mm) als auch bezüglich thermischer Stabilität bessere Werte zeigen als der Stand der Technik (V1). Anhand der MVR-Ergebnisse erkennt man, dass die Schmelzestabilität bei längeren Aufenthaltszeiten nicht so stark ansteigt wie bei V1 nach 20 min. Darüberhinaus zeigt sich anhand der Farbmessung nach/während der Wärmealterung bei 150° C, dass die erfindungsgemäßen Formmassen weniger schnell vergilben als der Stand der Technik (kleinere Werte in Delta E).

Die reduzierte Stabilisatormenge in V3 spiegelt sich in geringerer Wärmealterungsbeständigkeit wider.

**Tabelle 1: Zusammensetzungen und Materialeigenschaften**

| **Komponente/Testmethode** | E1 | E2 | E3 | E4 | E5 | V1 | V2 | V3 |
|---|---|---|---|---|---|---|---|---|
| | | | | | | | | |
| A/1 | 45.25 | 44.25 | 43.25 | 43.25 | 43.25 | 44.55 | 46.25 | 44.75 |
| B | 11.3 | 11.3 | 11.3 | 11.3 | 11.3 | 11.3 | 11.3 | 11.3 |
| C | 5 | 5 | 5 | 5 | 5 | 5 | 5 | 5 |
| D | 6.7 | 6.7 | 6.7 | 6.7 | 6.7 | 6.7 | 6.7 | 6.7 |
| E/1 | | | | | | 1.5 | | 1.5 |
| E/2 | 1 | 2 | 3 | | | | | |
| E/3 | | | | 3 | | | | |
| E/4 | | | | | 3 | | | |
| F/1 | 30 | 30 | 30 | 30 | 30 | 30 | 30 | 30 |
| F/2 | 0.75 | 0.75 | 0.75 | 0.75 | 0.75 | | 0.75 | 0.75 |
| F/3 | | | | | | 0.95 | | |
| Viskositätszahl in H2SO4 /cm3/g (ISO307) | 113 | 111 | 110 | 120 | 135 | 113 | 122 | 112 |
| Zug-E-Modul /MPa (ISO 527) | 12307 | 12411 | 12268 | 12494 | 12449 | 12063 | 11515 | 11926 |
| Bruchspannung /MPa (ISO 527) | 167 | 168 | 171 | 170 | 166 | 172 | 148 | 174 |
| Bruchdehnung /% (ISO 527) | 2.7 | 2.5 | 2.6 | 2.5 | 2.4 | 2.5 | 3.0 | 2.6 |
| MVR 275°C/5Kg (ISO1133) | 119 | 118 | - | 96 | 66 | 33 | 42 | 28 |
| MVR 275°C/5Kg (ISO1133) nach 10 min | 98 | 101 | - | 66 | 66 | 78 | - | 64 |
| MVR 275°C/5Kg (ISO1133) nach 20 min | 67 | 75 | - | 67 | 45 | >500 | - | 434 |
| UL94-V Prüfung (0.4 mm) | V-2 | V-2 | V-2 | V-2 | V-2 | n.c. | n.c. | n.c. |
| UL94-V Prüfung (0.8 mm) | V-0 | V-0 | V-0 | V-0 | V-0 | V-0 | V-2 | V-0 |
| GWFI 960° C / 1.5mm | erfüllt | erfüllt | erfüllt | erfüllt | erfüllt | erfüllt | erfüllt | erfüllt |
| GWIT max, 1.5mm /°C | 825 | 825 | 825 | 825 | 825 | 875 | 825 | 850 |
| GWIT 775° C / 1.5mm | erfüllt | erfüllt | erfüllt | erfüllt | erfüllt | erfüllt | erfüllt | erfüllt |
| Bruchspannung nach 500 h Wärme-lagerung bei | 119 | 124 | | | | 122 | | 95 |
| 150° C /MPa (ISO 527) /% vom Ursprungswert | 72 | 74 | | | | 71 | | 51 |
| Farbmessung nach 24h Wärme-lagerung bei 150°C /delta E (DIN 53236) | 18 | 21 | | | | 32 | | 36 |
| Farbmessung nach 48h Wärme-lagerung bei 150°C /delta E (DIN 53236) | 26 | 27 | | | | 43 | | 43 |

## Patentansprüche

1. Thermoplastische Formmassen, enthaltend
A) 20 bis 96,9 Gew.-% eines thermoplastischen Polyamides,
B) 1 bis 20 Gew.-% eines anorganischen Phosphinatsalzes,
C) 1 bis 15 Gew.-% eines organischen Phosphinatsalzes,
D) 1 bis 15 Gew.-% Melamincyanurat,
E) 0,1 bis 10 Gew.-% eines Polyvinylpyrrolidonhomopolymeren,
F) 0 bis 50 Gew.-% weiterer Zusatzstoffe,
wobei die Summe der Gewichtsprozente A) bis F) 100 % ergibt und das Molekulargewicht Mn (Zahlenmittel) der Komponente E) gemäß GPC (PVP-Standard und Wasser/Methanol (80/20) mit 0,01 mol/L Phosphatpuffer (pH 7,4) als Elutionsmittel) von 1000 bis 500.000 g/mol beträgt.

2. Thermoplastische Formmassen nach Anspruch 1, enthaltend
A) 30 bis 92,5 Gew.-%,
B) 5 bis 20 Gew.-%,
C) 1 bis 10 Gew.-%,
D) 1 bis 10 Gew.-%,
E) 0,5 bis 8 Gew.-%,
F) 0 bis 40 Gew.-%,
wobei die Summe der Gewichtsprozente A) bis F) 100 % ergibt.

3. Thermoplastische Formmassen nach den Ansprüchen 1 oder 2, in denen die Komponente B) einem Metallsalz einer anorganischen Phosphinsäure der Formel (I) entspricht: 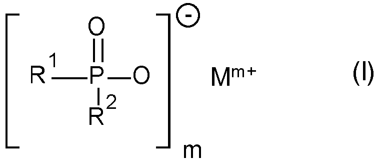
in der R¹ und R² Wasserstoff und
M = Mg, Ca, Al, Zn und
m = 1 bis 3
bedeuten.

4. Thermoplastische Formmassen nach den Ansprüchen 1 bis 3, enthaltend als Komponente B) Aluminiumhypophosphit.

5. Thermoplastische Formmassen nach den Ansprüchen 1 bis 4, in denen die Komponente C) ein organisches Phosphinsäuresalz der Formel (II) ist: 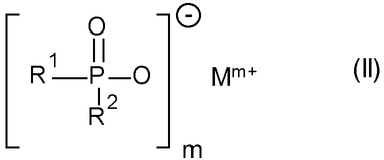
in der R¹ und R² gleich oder verschieden sind und C₁-C₆-Alkyl, linear oder verzweigt und/oder Aryl;
M = Mg, Ca, Al, Ti, Zn, Fe, Li, Na, K oder eine protonierte Stickstoffbase
m 1 bis 5; bedeuten.

6. Thermoplastische Formmassen nach den Ansprüchen 1 bis 5, in denen die Komponente C) ein Aluminiumsalz einer Dialkylphosphinsäure der Formel (II) ist.

7. Thermoplastische Formmassen nach den Ansprüchen 1 bis 6, in denen die Komponente E) pulverförmig ist.

8. Thermoplastische Formmassen nach den Ansprüchen 1 bis 7, in denen die Komponente E) einen d₅₀ Wert von 40 bis 180 µm aufweist (bestimmt mittels Laserbeugung am Pulver (Sympatec-Helos Rodos)).

9. Verwendung der thermoplastischen Formmassen gemäß den Ansprüchen 1 bis 8 zur Herstellung von Fasern, Folien und Formkörpern.

10. Fasern, Folien und Formkörper erhältlich aus den thermoplastischen Formmassen gemäß den Ansprüchen 1 bis 8.

## Claims

1. A thermoplastic molding composition comprising
A) from 20 to 96.9% by weight of a thermoplastic polyamide,
B) from 1 to 20% by weight of an inorganic phosphinate salt,
C) from 1 to 15% by weight of an organic phosphinate salt,
D) from 1 to 15% by weight of melamine cyanurate,
E) from 0.1 to 10% by weight of a polyvinylpyrrolidone homopolymer,
F) from 0 to 50% by weight of other additives,
where the total of the percentages by weight of A) to F) is 100% and the molar mass Mn (number average) of component E) measured by GPC (PVP standard and water/methanol (80/20) with 0.01 mol/L of phosphate buffer (pH 7.4) as eluent) is from 1000 to 500 000 g/mol.

2. The thermoplastic molding composition according to claim 1, comprising
A) from 30 to 92.5% by weight,
B) from 5 to 20% by weight,
C) from 1 to 10% by weight,
D) from 1 to 10% by weight,
E) from 0.5 to 8% by weight,
F) from 0 to 40% by weight,
where the total of the percentages by weight of A) to F) is 100%.

3. The thermoplastic molding composition according to claim 1 or 2, in which component B) is a metal salt of an inorganic phosphinic acid of the formula (I): 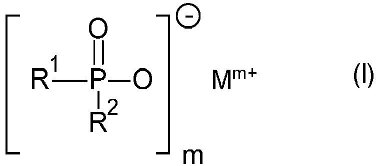
in which R¹ and R² are hydrogen and
M = Mg, Ca, Al, Zn and
m = from 1 to 3.

4. The thermoplastic molding composition according to claims 1 to 3, comprising aluminum hypophosphite as component B).

5. The thermoplastic molding composition according to claims 1 to 4, in which component C) is an organic phosphinic salt of the formula (II): 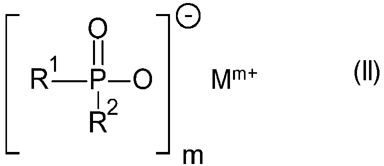
in which R¹ and R² are identical or different and are C₁-C₆-alkyl, linear or branched and/or aryl;
M = Mg, Ca, Al, Ti, Zn, Fe, Li, Na, K or a protonated nitrogen base
m is from 1 to 5.

6. The thermoplastic molding composition according to claims 1 to 5, in which component C) is an aluminum salt of a dialkylphosphinic acid of the formula (II).

7. The thermoplastic molding composition according to claims 1 to 6, in which component E) is pulverulent.

8. The thermoplastic molding composition according to claims 1 to 7, in which the d₅₀ value of component E) is from 40 to 180 µm (determined by means of laser scattering on the powder (Sympatec-Helos Rodos)).

9. The use of the thermoplastic molding compositions according to claims 1 to 8 for the production of fibers, films and moldings.

10. A fiber, film or molding obtainable from the thermoplastic molding compositions according to claims 1 to 8.

## Revendications

1. Masses à mouler thermoplastiques, contenant
A) 20 à 96,9 % en poids d'un polyamide thermoplastique,
B) 1 à 20 % en poids d'un sel de phosphinate inorganique,
C) 1 à 15 % en poids d'un sel de phosphinate organique,
D) 1 à 15 % en poids de cyanurate de mélamine,
E) 0,1 à 10 % en poids d'un homopolymères de polyvinylpyrrolidone,
F) 0 à 50 % en poids d'autres additifs,
la somme des pourcentages en poids de A) à F) donnant 100 % et le poids moléculaire Mn (moyenne en nombre) du composant E) selon une CPG (référence de PVP et eau/méthanol (80/20) avec 0,01 mole/L de tampon phosphate (pH 7,4) en tant qu'éluant) étant de 1 000 à 500 000 g/mole.

2. Masses à mouler thermoplastiques selon la revendication 1, contenant
A) 30 à 92,5 % en poids,
B) 5 à 20 % en poids,
C) 1 à 10 % en poids,
D) 1 à 10 % en poids,
E) 0,5 à 8 % en poids,
F) 0 à 40 % en poids,
la somme des pourcentages en poids de A) à F) donnant 100 %.

3. Masses à mouler thermoplastiques selon la revendication 1 ou 2, dans lesquelles le composant B) correspond à un sel métallique d'un acide phosphinique inorganique de formule (I) : 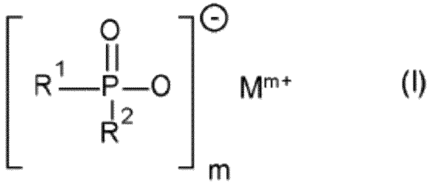
dans laquelle R¹ et R² signifient hydrogène et
M = Mg, Ca, Al, Zn et
m = 1 à 3.

4. Masses à mouler thermoplastiques selon les revendications 1 à 3, contenant en tant que composant B) de l'hypophosphite d'aluminium.

5. Masses à mouler thermoplastiques selon les revendications 1 à 4, dans lesquelles le composant C) est un sel d'acide phosphinique organique de formule (II) : 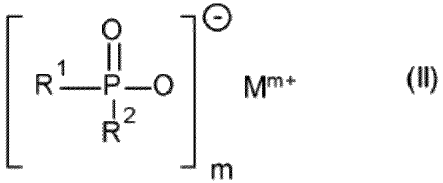
dans laquelle R¹ et R² sont identiques ou différents et signifient C₁₋₆-alkyle, linéaire ou ramifié et/ou aryle ;
M = Mg, Ca, Al, Ti, Zn, Fe, Li, Na, K ou une base azotée protonée
m signifie 1 à 5.

6. Masses à mouler thermoplastiques selon les revendications 1 à 5, dans lesquelles le composant C) est un sel d'aluminium d'un acide dialkylphosphinique de formule (II).

7. Masses à mouler thermoplastiques selon les revendications 1 à 6, dans lesquelles le composant E) est sous forme de poudre.

8. Masses à mouler thermoplastiques selon les revendications 1 à 7, dans lesquelles le composant E) présente une valeur d₅₀ de 40 à 180 µm (déterminée au moyen de diffraction laser sur poudre (Sympatec-Helos Rodos)).

9. Utilisation des masses à mouler thermoplastiques selon les revendications 1 à 8 pour la préparation de fibres, de feuilles et de corps moulés.

10. Fibres, feuilles et corps moulés pouvant être obtenu(e)s à partir des masses à mouler thermoplastiques selon les revendications 1 à 8.
